# EUROPÄISCHE PATENTANMELDUNG

(11) **EP 4 671 464 A2**
(43) Veröffentlichungstag der Anmeldung: **31.12.2025**
(21) Anmeldenummer: 25180165.0
(22) Anmeldetag: 02.06.2025
(51) Int. Cl.: E04F 15/04, B32B 21/00, B32B 21/14, E04F 15/10

(54) **PLATTENFÖRMIGES BAUELEMENT**

(30) Priorität: 27.06.2024 DE 102024118286
(71) Anmelder: MeisterWerke Schulte GmbH, 59602 Rüthen-Meiste (DE)
(72) Erfinder:
(74) Vertreter: Ksoll, Peter

(57) **Zusammenfassung**

Plattenförmiges Bauelement (1) aufweisend eine sichtseitige aus Echtholz ausgebildete Furnierlage (2) und eine Gegenzuglage (3), wobei zwischen der Furnierlage (2) und der Gegenzuglage (3) eine Trägerlage (4) angeordnet ist. Erfindungsgemäß ist zwischen der Furnierlage (2) und der Trägerlage (4) und/oder zwischen der Gegenzuglage (3) und der Trägerlage (4) eine Stabilisierungslage (5) angeordnet ist, wobei das plattenförmigen Bauelement (1) eine Gesamtstärke (SG) von 1,5 mm bis 4,0 mm aufweist.

## Beschreibung

Die vorliegende Erfindung betrifft ein plattenförmiges Bauelement gemäß den Merkmalen im Oberbegriff von Anspruch 1.

Plattenförmige Bauelemente, die als dünne Bodenbeläge verwendet werden und eine Gesamtstärke von weniger als 5 mm aufweisen, sind im Stand der Technik bekannt. Entsprechende Bodenbeläge werden zumeist mit dekorativen Dekoroberflächen, beispielsweise bedruckte Dekorpapiere oder Dekorfolien, und mit verschleißfesten Oberflächen ausgeführt. Mithin weisen die Bauelemente einen Mehrschichtaufbau auf, bestehend aus einer transparenten Nutzlage, zumeist aus PVC oder PET, einer Dekorfolie und einer Trägerlage.

Aufgrund der geringen Gesamtstärke können die plattenförmigen Bauelemente direkt auf bestehende Böden, beispielsweise alte Parkett-, Laminat- oder PVC-Böden, verlegt, insbesondere verklebt werden. Hier hat es hat sich als vorteilhaft erwiesen, wenn die plattenförmigen Bauelemente eine gewisse Elastizität bzw. Biegsamkeit aufweisen, damit die Einzelelemente stumpfstoßend aneinander in das Kleberbett oder den gespachtelten Estrich verlegt und anschließend angewalzt werden können.

Plattenförmige Bauelemente mit einer Echtholzoberfläche sind im Stand der Technik jedoch erst ab Stärken von über 5 mm bekannt. Großformatige Landhausdielenprodukte sogar erst ab Stärken von 10 mm und aufwärts. Dies ist damit begründet, dass plattenförmige Bauelemente mit Echtholzoberflächen einen stabilen Holz- bzw. Holzwerkstoffträger benötigen, da die Echtholzlage ohne eine stabile Trägerlage bei Biegebeanspruchung beschädigt werden kann und insbesondere zur Rissbildung quer zum Faserverlauf neigt.

Hiervon ausgehend ist es die Aufgabe der vorliegenden Erfindung ein plattenförmiges Bauelement mit einer sichtseitigen Echtholzlage aufzuzeigen, welches eine verbesserte Biegsamkeit bei gleichzeitiger Schonung der Echtholzlage aufweist.

Die Lösung dieser Aufgabe zeigt Anspruch 1 auf.

Vorteilhafte Ausführungsvarianten der Erfindung sind Gegenstand der abhängigen Ansprüche.

Das plattenförmige Bauelement weist eine sichtseitige Echtholzlage, insbesondere Echtholz-Furnierlage, und eine Gegenzuglage auf. Zwischen der Furnierlage und der Gegenzuglage ist eine Trägerlage angeordnet.

Das plattenförmige Bauelement zeichnet sich erfindungsgemäß weiterhin dadurch aus, dass zwischen der Echtholzlage und der Trägerlage und/oder zwischen der Gegenzuglage und der Trägerlage eine Stabilisierungslage angeordnet ist. Erfindungswesentlich ist weiterhin, dass das plattenförmige Bauelement eine Gesamtdicke bzw. Gesamtstärke von 1,5 mm bis 4,0 mm aufweist.

Die geringe Gesamtstärke des plattenförmigen Bauelements stellt eine gewisse Biegsamkeit sicher, die insbesondere beim Verlegen des plattenförmigen Bauelements als Bodenbelag erforderlich ist. Die erfindungsgemäße Anordnung einer Stabilisierungslage zwischen der Furnierlage und der Trägerlage und/oder zwischen der Gegenzuglage und der Trägerlage bewirkt, dass eine Beschädigung und insbesondere eine Rissbildung in der Echtholzlage trotz Biegebelastung vermieden wird. Die Echtholzlage wird geschont und die Strapazierfähigkeit des plattenförmigen Bauelements insgesamt erhöht. Zudem fördert die Stabilisierungslage in Kombination mit der Echtholzlage die Eindruckstabilität des plattenförmigen Bauelements. Dies führt dazu, dass dieser beispielsweise stuhlrollenbeständig nach Prüfungsnorm ISO 4918 ist.

Das erfindungsgemäße plattenförmige Bauelement kann aufgrund seiner geringen Gesamtstärke und der Elastizität bzw. Biegsamkeit als Renovierungsboden verwendet werden, ohne dass auf eine Echtholzoberfläche verzichtet werden muss. Dazu ist es vorteilhaft, wenn der Renovierungsbelag mit möglichst einfachen Hilfsmitteln auf den Altbelägen aufgebracht werden kann, beispielsweise mit doppelseitig klebenden Folien, sogenannten "Trockenklebstoffen". Das ist nur technisch möglich, wenn der Renovierungsbelag dimensionsstabil ist und sich einfach in der Anwendung verlegen lässt.

Vorzugsweise weist das plattenförmige Bauelement eine Gesamtstärke von 2 bis 3,5 mm auf. Diese Stärke hat sich im Rahmen der Erfindung als optimaler Kompromiss zwischen Biegsamkeit, Eindruckstabilität und Beständigkeit der Echtholzlage herausgestellt.

Die Echtholzlage selbst hat vorzugsweise eine Stärke kleiner als 1,0 mm, insbesondere zwischen 0,55 und 0,65 mm. Eine entsprechende Materialstärke ermöglicht es, möglichst wenig Echtholz für die Herstellung des plattenförmigen Bauelements zu verwenden, ohne dass die Optik oder die Belastbarkeit des plattenförmigen Bauelements beeinträchtigt wird. Insbesondere durch die Nutzung von dünnen Echtholzfurnieren kann im Gegensatz zu vollwertigen Parkettböden eine nachhaltige Holznutzung sichergestellt werden.

Die zwischen der Echtholzlage und der Gegenzuglage angeordnete Trägerlage weist insbesondere eine Stärke zwischen 0,8 und 3,0 mm auf. Dies gewährleistet einen guten Kompromiss aus Elastizität bzw. Biegsamkeit und Stabilität.

Die erfindungsgemäße Stabilisierungslage zwischen der Echtholzlage und der Trägerlage und/oder zwischen der Gegenzuglage und der Trägerlage ist bevorzugt aus einem Vliesmaterial und/oder einem Gewebematerial gebildet. Besonders bevorzugt eignet sich ein Glasvlies mit einem Flächengewicht zwischen 30 und 120 g/m², idealerweise auf beiden Seiten Trägerlage. Alternativ kann ein Papiervlies mit 25 bis 85 g/m³ Flächengewicht auf Zellulosebasis mit oder einer Kunststoffverstärkung eingesetzt werden. Eine Kunststoffverstärkung kann aus Polyethylen (PE), Polyethylenephtalat (PET) oder Polyester sowie Polyamit (PA) bestehen. Als Gewebelagen kommen beispielsweise PE-Gittergewebe in Betracht. Auch Gittergewebe aus Glasfasermaterial sind möglich.

Eine Stabilisierungslage besteht bevorzugt aus einem Glasvlies. Das Glasvlies besteht aus Glasfasern mit einer Länge von 6 mm bis 10 mm. Die Glasfasern weisen einen Nenndurchmesser von 10 µm bis 11 µm auf. Die Glasfasern sind durch einen modifizierten Polyvinylalkohol gebunden. Das Glasvlies ist flexibel, leicht und dünn, jedoch sehr stabil und reißfest. Durch eine oder mehrere Stabilisierungslagen aus Glasvlies wird das Bauelement verstärkt und Spannungen im Material verringert, in dem das Glasvlies die Oberfläche gleichmäßig unterstützt und die Belastbarkeit erhöht. Insgesamt wird die Stabilität und die Langlebigkeit des Bodenelements erhöht.

Eine Stabilisierungslage kann auch aus einem Vlies bestehen, welches auf reiner Kunststoffbasis gebildet ist, insbesondere aus einem Gemisch zwischen Polyethylenethtalat (PET) und Polyamit (PA).

Die Stabilisierungslage sorgt für eine verbesserte Dimensionsstabilität und Elastizität der Echtholzoberfläche und ermöglicht gleichzeitig bessere Verarbeitungsmöglichkeiten.

Eine Stabilisierungslage besitzt vorteilhafterweise eine Dehnung kleiner 7 % nach DIN-ISO 1924-2; Ausgabedatum: 2009-05.

In einer vorteilhaften Ausführungsvariante der Erfindung ist die Stabilisierungslage, die Gegenzuglage und/oder die Echtholzlage imprägniert. Besonders bevorzugt wird die Imprägnierung mit einem thermoplastischen Klebstoff durchgeführt, der wärmeaktivierbar ist. Eine Imprägnierung der Echtholzlage und der Gegenzuglage hat den Vorteil, dass die oberste und unterste Lage des plattenförmigen Bauelements jeweils gegen Feuchtigkeit geschützt sind. Als Imprägniermittel kann beispielsweise Acronal Pure von der Firma BASF verwendet werden. Eine Imprägnierung der Stabilisierungslage oder -lagen hat den Vorteil, dass diese durch die klebende Eigenschaft des Imprägniermittels bei dem Verpressen der einzelnen Lagen zum plattenförmigen Bauelement für eine sichere Verbindung zwischen den einzelnen Schichten sorgen. Zudem wird während des Pressvorgangs Imprägniermittel auf die Furnierlage bzw. die Gegenzuglage übertragen, so dass auch durch eine Imprägnierung der Stabilisierungslagen ein Schutz gegen Feuchtigkeit der äußeren Lagen erreicht werden kann.

Besonders vorteilhaft hat sich ein Auftrag von 30 bis 100 g/m³ des flüssigen Imprägniermittels auf die zu imprägnierende Lage erwiesen.

Vorzugsweise weist die Furnierlage eine Lackbeschichtung und/oder eine Ölbeschichtung auf. Durch eine entsprechende Oberflächenbehandlung wird die Widerstandsfähigkeit der Furnierlage gegenüber Kratzern, Feuchtigkeit oder anderweitigen Belastungen weiter erhöht. Insbesondere Feuchteschäden durch aufstehende Gegenstände, wie Blumenvasen, Zierbrunnen oder Weihnachtsbaumständer und ähnliche Objekte, sind ein im üblichen Gebrauch weitverbreitetes Problem. Dem wird durch die Ausgestaltung des erfindungsgemäßen Bauelements und insbesondere der Oberflächengestaltung mit der erfindungsgemäß vorgesehenen Oberflächenbehandlung entgegengewirkt.

Die Lackbeschichtung weist eine Biegedehnung und Biegeverformung auf, die derjenigen der Trägerlage entspricht, sodass ein plattenförmiges Bauelement die bestimmungsgemäß vorgesehenen Biegeeigenschaften aufweist.

Die Biegefestigkeit, die Biegedehnung und die Elastizitätsgrenze der Trägerlage, der Furnierlage sowie der zumindest eine Stabilisierungslage und einer optionalen Gegenzuglage sind aufeinander abgestimmt, damit das plattenförmige Bauelement die gewünschte Biegsamkeit besitzt.

Eine Lackbeschichtung ist dementsprechend ebenfalls hoch flexibel und weist eine gute Transparenz auf. Die Lackbeschichtung weist einen Abrieb von größer 800 Übergängen auf, gemessen nach EN13696 "Falling Sand Method".

Die aus Echtholz ausgebildete Furnierlage kann aus Eiche, Esche, Nußbaum, Weißtanne, Olive, Kirschbaum, Hickory oder aus Tropenhölzern wie Wenge oder Teak oder aus geräucherten Hölzern bestehen. Grundsätzlich sind alle dekorativen Holzarten, die bei der Parkettherstellung eingesetzt werden auch als Furnierlage im Rahmen der Erfindung einsetzbar.

Bei einem Verfahren zur Herstellung eines erfindungsgemäßen plattenförmigen Bauteils werden die Furnierlagen im Rahmen einer Sandwichverpressung mit der Stabilisierungslage verbunden. Dies führt dazu, dass die Eindruckbeständigkeit der Echtholzoberfläche erhöht wird. Die Brinellhärte steigt gegenüber Standardhölzern bzw. Standardholzoberflächen um mindestens 5 % bis 10 %.

Übliche Eichenoberflächen nach dem Stand der Technik zeigen eine Brinellhärte von 25 HB bis 34 HB Diese ist gemessen nach EN 1534. Infolge des erfindungsgemäßen Mehrlagenaufbaus und insbesondere durch den Verbund der Trägerlage, der oberen Stabilisierungslage und der Furnierlage werden bei Furnierlagen aus Eichen nunmehr Brinellhärten von größer 40 HB erzielt. In Verbindung mit einer mineralischen Trägerlage konnten sogar Brinellhärten von größer 50 HB erreicht werden.

Die Trägerlage besteht vorzugsweise aus gebundenen mineralischen Füllstoffen. Die mineralischen Füllstoffe bestehen beispielsweise aus Calciumcarbonat, Talkum oder Silicium / Siliciumdioxid oder Quarzsand. Solche Trägerlagen haben ein hohes Eigengewicht (Dichte größer 1000kg/m³) und in Verbindung mit Polyurethanbindemitteln oder Arcylatbindemittel oder thermoplastischen Bindemitteln auch hohe Festigkeiten und Druckfestigkeiten. Das für die Trägerlage verwendete Bindemittel sollte elastisch formbar, biegsam sein, um die Verlegung des Fertigprodukts zu erleichtern. Bewährt haben sich Rezepturen, die eine Biegung quer zur Längsrichtung eines plattenförmigen Bauelements um einen Rohrdurchmesser von größer 20 cm ohne Bruch ermöglichen. Im Sinne der Nachhaltigkeitsstrategie können mineralische Füllstoffe auch aus Recyclingprozeßen herangezogen werden, wenn die Korngrößenverteilung und die Inhaltstoffe keine schädlichen, toxischen Anteile enthalten.

Eine Trägerlage aus mineralischen Füllstoffen besitzt insbesondere eine Dichte von größer oder gleich 1.200 kg/m³, bevorzugt größer 1.350 kg/m³ und insbesondere von größer oder gleich 1.500 kg/m³.

Die Trägerlage kann alternativ aus Kork gebildet werden. Als besonders vorteilhaft hat sich eine Trägerlage aus hochverdichtetem Kork mit einer Dichte größer als 200 kg/m³, bevorzugt größer 350 kg/m³, besonders bevorzugt größer 500 kg/m³, herausgestellt. Der Kork wird bevorzugt in Bahnenware bereitgestellt, die durch die Bindung des Korkgranulats mit einem Polyurethan-Bindemittel oder aminoplastischem Bindemittel oder thermoplastischem Bindemittel hergestellt wird. Der Kork selbst entsteht als Beiprodukt aus der Korkstopfenproduktion. Dazu werden die anfallenden Abschnitte mit den ausgestochenen Korkstopfen granuliert und anschließend mit dem Bindemittel zu einem Korkblock weiterverarbeitet. Dieser wird anschließend in einzelne Lagen aufgesägt oder als Bahnenware weiterverarbeitet.

Alternativ können auch Trägerlagen aus natürlich anfallenden Material wie beispielsweise Hanf, Flachs, Ölfruchtfleischfasern oder Rezyklatmaterialien verwendet werden.

Denkbar sind jedoch auch klassische Trägerlagen, beispielsweise aus langfaserigen, hochgefüllten Kartonpapierträgern. Diese haben insbesondere ein Flächengewicht von 600 bis 1200 g/m². Klassische Trägerlagen sind in der Regel feuchtigkeitsbeständig und zeichnen sich aufgrund des hohen mineralischen Füllstoffgrad durch dimensionsstabile Eigenschaften aus. Derartige Trägerlagen werden vorzugsweise auf Anlagen der Papierherstellung produziert. Infolgedessen kommt es zu einen Faserausrichtung ähnlich der von Papier, d.h. mit einem größeren Breitenwachstum in Querrichtung als in Längsrichtung. Um die Wachstumswerte der Echtholzoberfläche zu kompensieren ist es technisch sinnvoll, diese so im Produktaufbau zu positionieren, dass die Produktionsrichtung quer zur Holzfaserrichtung der Deckschicht eingebaut wird.

Im Rahmen der Erfindung wurde zudem festgestellt, dass sich insbesondere auch elastische Rezyklatprodukte aus der Kaffeeindustrie als Trägerlage anbieten. Diese Trägerlagen werden aus einem Gemisch von getrocknetem Kaffeepulver und/oder Teeresten und/oder geschredderten Papptrinkbechern zusammen mit einem Bindemittel hergestellt. Entsprechende Trägerlagen zeichnen sich durch gute Bindungskräfte und eine geringe Wasseraufnahme aus. Dabei haben sich insbesondere die im Kaffeepulver oder auch Tee enthaltenen Öle als vorteilhaft hinsichtlich der Feuchtebeständkeit erwiesen. Dies hat insbesondere den Vorteil, dass die Trägerlage kein Wasser über die Seitenkanten einzieht.

Das Material der Trägerlage sollte besonders bevorzugt eine Wasseraufnahme von kleiner als 10 Gew.-% haben. Eine besonders bevorzugte Ausführungsform mit einer wasserfesten Trägerlage aus PUR-Bindemittel und mineralischen Füllstoffen besitzt eine Wasseraufnahme von kleiner 4 Gew.%. und eine Kantenquellung von kleiner 2%.

Eine weitere Option zur Ausbildung der Trägerlage besteht darin, Polyvinylbutyral (PVB) als Bindemittel in Kombination mit Füllstoffen wie Kork, Nussschalen, Olivenkernen oder anderem organischen Material zu verwenden. Auch Abfallprodukte aus der Lebensmittelindustrie können hier als Füllstoff in Frage kommen. PVB hat viskoelastische Eigenschaften und eignet sich sehr gut für die Kombination mit einem Füllstoff. In Kombination ist ein entsprechendes Gebilde biegsam, flexibel und sehr beständig gegen Eindruck. Weiterhin zeigt es eine hohe Rückstellkraft beim Eindrücken, so dass sich eine entsprechende Trägerlage optimal für die Anforderungen des erfindungsgemäßen plattenförmigen Bauelements eignet.

Im Rahmen der Erfindung kann eine Trägerlage auch aus Recyclingbaumwolle bestehen, wobei diese beispielsweise aus Jeanshosen mit oder ohne Kunststoffanteilen wie Elastan in Verbindung mit acrylatbasierten oder anderen geeigneten Bindemitteln gebildet sein kann. Hierbei ergeben sich sehr gut nutzbare, hochfeste, elastische Trägerlagen. Aufgrund der geringen vorgesehenen Schichtstärke von 0,8 bis 2,0 mm müssen die Recyclingfaseranteile sehr fein sein, insbesondere sind Korngrößen bzw. Faserlängen kleiner 1 mm, die als Staubfraktion zu klassifizieren sind, vorteilhaft.

Durch den Einsatz von Recyclingbaumwolle, hergestellt aus textilen Bekleidungsmaterialien kann ein sinnvoller Beitrag zum Recycling bzw. eine Wiederverwertung geleistet werden. In jedem Fall sind aus einem Recyclingprozess herrührende Rohstoffe für die Komposition der Trägerlager sinnvolle Komponenten, welche die Ökobilanz des Gesamtproduktes positiv beeinflussen. Geeignet sind beispielsweise aus alten Jeansbekleidungen gewonnene Baumwoll-Kurzfasern.

In einer weiteren vorteilhaften Ausführungsvariante der Erfindung ist die Gegenzuglage ebenfalls aus einer Echtholzfurnierlage gebildet. Insbesondere ist die Gegenzuglage aus einem identischen Material wie die Furnierlage gebildet. Bewährt haben sich Gegenzugfurniere in Stärken von 0,5-1,2 mm aus Pappel oder Birkenholz oder Fichte. Über die Stärke des Gegenzugs kann im Bedarfsfall die Gesamtstärke des plattenförmigen Bauelements kalibriert werden Es ist vorteilhaft, wenn der Gegenzug eine Feuchtigkeitssperre aufweist. Hierfür kann der Gegenzug durch einen Lack abgesperrt bzw. mit einem Lack beschichtet sein. Die Auftragsmenge eines feuchtigkeitsabsperrenden Lackes beträgt zwischen 30g/m² und 120g/m².

Die Lackierung ist so beschaffen, dass die zur Montage notwendigen Bodenbelagsklebstoffe sehr gut an der Lackschicht haften. Dies wird durch besondere Additive und Haftverbesserer erreicht. Die Lackierung dient in erster Linie zur Vermeidung von Auffeuchtung des Gegenzugfurniers aus dem Bodenbelagsklebstoff. Übliche Dispersions-Bodenbelagklebstoffe enthalten Wasser, das im Rahmen der Abbindephase trocknet. Ist der Holzgegenzug nicht abgesperrt, würde ein Großteil der Feuchtigkeit in den Gegenzug wandern und im Holz für Quellung sorgen.

Eine Gegenzuglage besteht insbesondere aus einem Holzfurnier. Die Gegenzuglage weist eine Feuchtigkeitsabsperrung auf bzw. ist mit einer Feuchtigkeitsabsperrung versehen. Insbesondere weist die Gegenzuglage aus Holzfurnier eine feuchtigkeitssperrende Lackierung oder Beschichtung auf.

Der beschriebene Aufbau des erfindungsgemäßes Bauproduktes unterscheidet sich von üblichem Parkett oder Echtholz-Mehrschichtkonstruktionen dadurch, dass eine starre Lastverteilung aus einem Holzwerkstoff oder einer Kunststoffplatte fehlt.

Die Echtholzoberschicht wird durch eine biegsame, dünne Trägerlage und der/den Stabilisierungslage (n) hinsichtlich der notwendigen Stabilität und Dimensionsstablität fixiert. Eine vergleichbare Echtholzschicht beispielsweise aus Eiche weist bei Klimaschwankungen zwischen 20 und 85% relative Luftfeuchtigkeit (rH) Dimensionsänderungen von größer 1% quer zur Faser auf, in Längsrichtung der Faser größer 0,20%. Das erfindungsgemäße Produkt weist Ausdehnungswerte in dem vorgenannten Klimaspektrum von 20-85% Feuchte bis maximal 0,6% quer zur Faserrichtung, vorzugsweise kleiner 0,4%, und kleiner 0,1% in Faserlängsrichtung auf.

Die Trägerlage und die zumindest eine Stabilisierungslage sind dazu eingerichtet und bestimmt, ein klimabedingtes Längenwachstum der Furnierlage zu kompensieren.

Ein unverklebtes plattenförmiges Bauelement weist einBreitenwachstum von kleiner 0,6 % auf, bevorzugt ist das Breitenwachstum kleiner 0,4 %, insbesondere kleiner 0,2 %.

Eine Kantenquellung beträgt nach 24 h Wasserlagerung kleiner 5 %, besonders bevorzugt kleiner 2 %.

Im Gegensatz zu Bodenbelägen aus Holz und Holzwerkstoffen überzeugt der erfindungsgemäße Belag durch wenig Wachstum oder Bewegung infolge Schwankungen der Luftfeuchtigkeit.

Infolge des besonderen Produktaufbaus zeichnet sich das Produkt dadurch aus, das es im Gegensatz zu elastischen Bodenbelägen, sogenannten Dry-Back Konstruktionen nicht auf Änderungen der Raumtemperatur oder infolge Sonneneinstrahlung reagiert.

Deshalb ermöglicht das erfindungsgemäße Produkt auch Verlegungen mit sogenannten Trockenklebstoffen, also doppelseitig klebende Klebefolien zur Fixierung des Belages auf Wand oder Bodenflächen, insbesondere auf alten, bereits mit Belägen belegten Oberflächen.

Ein Verfahren zur Herstellung eines plattenförmigen Bauelements umfasst die folgenden Verfahrensschritte:
- Bereitstellen einer Trägerlage, einer Gegenzuglage, einer Echtholz-Furnierlage und wenigstens einer Stabilisierungslage,
- Imprägnierung der Gegenzuglage und Furnierlage und/oder der wenigstens einen Stabilisierungslage mit einem thermoplastischen Klebstoff,
- Anordnung der Lagen zu einem Mehrschichtkörper, dergestalt, dass die Trägerlage zwischen der Furnierlage und der Gegenzuglage angeordnet ist, wobei die Stabilisierungslage zwischen der Furnierlage und der Trägerlage und/oder zwischen der Gegenzuglage und der Trägerlage angeordnet ist,
- Erwärmen des Mehrschichtkörpers in einer Heizvorrichtung, insbesondere Heizplatte, auf eine Temperatur von 90°C bis 150°C,
- Verpressen des Mehrschichtkörpers mit einem Druck größer 50 N/cm² um das plattenförmige Bauelement zu erhalten.

Vorzugsweise wird der Pressvorgang mit einer Verweilzeit von 15 bis 90 Sekunden durchgeführt.

Weiterhin vorteilhaft wird der Pressvorgang bei Temperaturen von 10°C bis 95°C durchgeführt.

Im Rahmen der Fertigung wird an zumindest einer Seitenwand eines plattenförmigen Bauelements eine Fase ausgebildet. Vorzugsweise werden alle Seitenwände eines plattenförmigen Bauelements mit einer Fase versehen.

Das plattenförmige Bauelement ist biegsam. Bei einer Biegeprüfung lässt sich das Bauelement um einen Prüfkörper mit einem Radius von 500 mm bzw. einem Radius von 200 mm in Querrichtung biegen ohne dabei beschädigt zu werden. Auch oberseitige Beschichtung, insbesondere eine elastische Oberflächenlackierung wird bei einer solchen Biegung nicht rissig.

Die Biegsamkeit und die guten Biegeeigenschaften besitzt das plattenförmige Bauelement unter normalen Nutzungsklimaten, also bei Temperaturen zwischen 18° C bis 27° C und einer relativen Luftfeuchtigkeit von 55 % bis 60 %.

Oberseitige Fehlstellen wie insbesondere Äste oder Risse in der Furnierlage werden mit einer flexiblen Spachtelmasse gefüllt. Die Spachtelmasse ist ebenfalls so formuliert, dass sie bei einer möglichen Verformung oder Biegung des plattenförmigen Bauelements nicht bricht oder abplatzt bzw. herausfällt.

Die erfindungsgemäßen plattenförmigen Bauelemente sind dazu eingerichtet und bestimmt als gebrauchsfertiger Boden- oder Wandbelag verlegt und genutzt zu werden.

Ein Bauelement ist mit einem Cuttermesser oder einer Klinge schneidbar. Insbesondere kann ein Bauelement durch Einritzen und Brechen getrennt werden.

Bei einer für die Praxis besonders vorteilhaften Ausführungsform eines erfindungsgemäßen plattenförmigen Bauelements weist dieses sichtseitig eine aus Echtholz bestehende Furnierlage sowie eine mineralische Trägerlage auf. Zwischen der sichtseitigen Furnierlage und der Trägerlage ist eine Stabilisierungslage aus einem Glasvlies angeordnet. Unterhalb der Trägerlage ist ebenfalls eine Stabilisierungslage aus einem Glasvlies angeordnet.

Die mineralische Trägerlage hat ein Flächengewicht von 2,2 kg/m² bei einer Stärke von 1,2 mm bis 1,6 mm, insbesondere 1,4 mm. Der mineralische Füllstoff in der mineralischen Trägerlage ist bevorzugt Calciumcarbonat (Kreide) mit einer Körnung kleiner gleich 0,7 mm.

Eine Oberflächenprüfung der Eindruckfestigkeit, auch Brinellhärte genannt, wurde bei dem plattenförmigen Bauelement wie vorstehend charakterisiert nach EN 1534 bestimmt. Der Prüfwert ergab eine Brinellhärte von über 35 HB. Dies führt in der Fußbodennorm 14354 zu der höchsten Einstufungsklasse.

Die Prüfung der Lackelastizitität wird nach EN 14354, Anhang C (2016) geprüft. Hierbei wird eine Stahlkugel aus einer großen Höhe auf das Bauelement fallengelassen. Bei einer Fallhöhe größer 1.400 mm wird die höchste Einstufung erzielt (Klasse EC3).

Praktische Versuche haben gezeigt, dass der biegsame Dünnschichtaufbau eines erfindungsgemäßen plattenförmigen Bauelements im Vergleich mit herkömmlichen starren Bauelementen vergleichbare oder bessere Oberflächenbelastungswerte zeigt, obwohl das erfindungsgemäße plattenförmige Bauelement im erfindungsgemäß beanspruchten Bereich dünn ist. Dies wird durch die Kombination der Trägerlage und der Stabilisierungslagen, insbesondere von glasfaserbasierten Glasstabilisierungslagen bewerkstelligt. Glasfaserbasierte Stabilisierungslagen weisen insbesondere ein Flächengewicht von jeweils 30 g/m² auf. Diese sind wie zuvor beschrieben oberhalb und unterhalb der Trägerlage integriert und mittels hochfesten polyurethan- oder acrylatbasierten Bindemitteln gefügt.

Die Biegsamkeit wurde durch Biegerollentests geprüft. Bei diesem Test wird ein plattenförmiges Bauelement über eine Rolle mit einem bestimmten Durchmesser gebogen. Dabei wird gemessen, wie stark das Bauelement bzw. das Material gebogen werden kann bevor es Risse bekommt, bricht oder dauerhaft verformt ist.

Die innere Festigkeit (Querzugfestigkeit) des erfindungsgemäßen plattenförmigen Bauelements liegt bei größer 1,0 N/mm² (gemessen nach EN 13329 Annex B; Surface soundness = Bruchfestigkeit in z-Richtung). Bei diesen Festigkeitswerten besteht ein erfindungsgemäßes plattenförmiges Bauelement auch einen sogenannten "Stuhlrollentest". Dort wird nach 25.000 Übergängen das Langzeitverhalten des Belags unter belastenden Bürorollstühlen simuliert. Hierbei wird in erster Linie geprüft, ob es zu Ablösungen oder Beschädigungen oder Lagentrennungen an der Oberfläche kommt.

Vorteilhafte Ausführungsvarianten sind Gegenstand der nachfolgenden Beschreibung. Diese dient dem einfachen Verständnis der Erfindung. Es zeigen:
- Figur 1: einen Querschnitt durch ein erfindungsgemäßes plattenförmiges Bauelement in einer ersten Ausführungsvariante,
- Figur 2: einen Querschnitt durch ein erfindungsgemäßes plattenförmiges Bauelement in einer zweiten Ausführungsvariante,
- Figur 3: einen Querschnitt durch ein erfindungsgemäßes plattenförmiges Bauelement in einer dritten Ausführungsvariante,
- Figur 4a bis 4f: ein Verfahren zur Herstellung eines plattenförmigen Bauelements, mit der Darstellung von sechs Verfahrensschritten,
- Figur 5: schematisch und technisch vereinfacht einen Querschnitt durch ein erfindungsgemäßes plattenförmiges Bauelement,
- Figur 6: einen Querschnitt durch eine weitere Ausführungsvariante eines erfindungsgemäßen plattenförmigen Bauelements und
- Figuren 7 bis 9: technisch schematisierte Darstellungen von Biegerollentests.

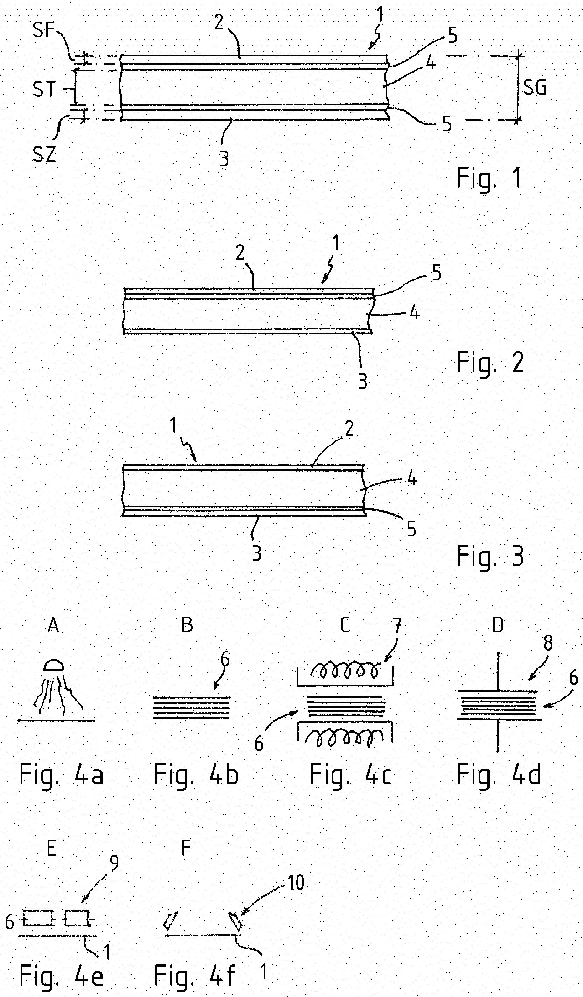

Die Figuren 1 bis 3 sind technisch schematisiert dargestellt und nicht maßstäblich zu verstehen. In den Figuren werden für gleiche oder funktionell einander entsprechende Bauteile bzw. Bauteilkomponenten die gleichen Bezugszeichen verwendet, auch wenn aus Gründen der Vereinfachung auf eine wiederholte Beschreibung verzichtet wird.

Die Figur 1 zeigt den Querschnitt einer ersten Ausführungsvariante eines plattenförmigen Bauelements 1. Das plattenförmige Bauelement 1 ist ein Bodenbelag bzw. Bodenpaneel, welches eine sichtseitige aus Echtholz ausgebildete Furnierlage 2 und eine Gegenzuglage 3 aufweist. Zwischen der Furnierlage 2 und der Gegenzuglage 3 ist eine Trägerlage 4 angeordnet.

Zwischen der Furnierlage 2 und der Trägerlage 4 als auch zwischen der Gegenzuglage 3 und der Trägerlage 4 ist jeweils eine Stabilisierungslage 5 angeordnet.

Erfindungsgemäß weist das plattenförmige Bauelement 1 eine Gesamtstärke SG von 1,5 bis 4,0 mm auf.

Aufgrund der geringen Gesamtstärke SG des plattenförmigen Bauelements 1 eignet sich dieses insbesondere als Renovierungsboden, da die plattenförmigen Bauelemente 1 auf bestehendes Parkett, Vinyl oder anderweitige Bodenbeläge direkt aufgebracht werden können. Dazu werden die plattenförmigen Bauelemente 1 insbesondere auf den bestehenden Bodenbelag verklebt. Alternativ können die plattenförmigen Bauelemente 1 auf gespachtelten Estrichoberflächen verlegt werden. Dies eignet sich insbesondere auch in Verbindung mit einer Fußbodenheizung, da die plattenförmigen Bauelemente nur eine geringe Gesamtstärke SG aufweisen.

Aufgrund dieser Verlegeart müssen die plattenförmigen Bauelemente 1 eine Elastizität bzw. Biegsamkeit aufweisen. Dies ist jedoch für die sichtseitige auf Echtholz ausgebildete Furnierlage 2 problematisch, da diese insbesondere quer zur Faserrichtung bei einer Biegebeanspruchung zu Rissbildungen neigt. Daher werden im Stand der Technik für Renovierungsböden keine Echtholzfurniere verwendet, sondern auf bedruckte Dekorpapiere oder Dekorfolien zurückgegriffen. Im Rahmen der Erfindung hat sich herausgestellt, dass durch die erfindungsgemäße Anordnung von Stabilisierungslagen 5 zwischen der Furnierlage 2 und der Trägerlage 4 als auch zwischen der Gegenzuglage 3 und der Trägerlage 4 eine Rissbildung bzw. eine Beschädigung der aus Echtholz ausgebildeten Furnierlage 2 vermieden werden kann. Zudem zeichnet sich das plattenförmige Bauelement 1 aufgrund der aus Echtholz ausgebildeten Furnierlage 2 durch eine hohe Eindruckstabilität aus.

Die Furnierlage 2 weist eine Stärke SF kleiner als 1 mm auf, nämlich zwischen 0,45 und 0,65 mm. Diese Stärke SF hat sich im Rahmen der Erfindung als guter Kompromiss zwischen Biegsamkeit und Eindruckstabilität herausgestellt. Insbesondere lassen sich Furnierlagen aus Edelhölzer wie Eiche, Esche oder Nussbaum in Stärken von kleiner 1mm durch geeignete Stabilisierungslagen sicher gegen Dimensionsveränderungen in Verbindung mit einer entsprechend schweren Trägerlage fixieren. Solche schweren Trägerlagen weisen ein Flächengewicht größer 500 g/m² auf. Vorzugsweise ist das Flächengewicht größer als 1000 g/m².

Die Trägerlage 4 weist eine Stärke ST zwischen 0,8 und 3,0 mm auf. Mit einer entsprechenden Stärke kann eine ausreichende Stabilität des plattenförmigen Bauelements 1 sichergestellt werden, wobei gleichzeitig noch eine Biegsamkeit bzw. Elastizität gewährleistet wird.

Stabilisierungslagen 5 sind zwischen 0,10 bis 0,80 mm stark und bestehen aus Glasvlies, kunststoffummantelten Glasfaservliesmaterialien, Papiervlies, kunststofffaserverstärkten Papiervliesen oder Kunststoffvliesmaterialien. Es sind auch Kombinationen aus Gittergeweben/Gittergelegen und Vliesmaterialien denkbar.

Als Stabilisierungslage 5 hat sich ein voluminöses Spezialvlies, überwiegend auf Zellulosefaserbasis mit einer Dehnung kleiner 7 % (nach DIN-ISO 1924-2) bewährt.

Eine Stabilisierungslage 5 kann in verschiedenen Ausführungsformen der Bauelementeproduktion zugeführt werden. Sinnvoll ist es die Stabilisierungslage 5 in gleichen Abmessungen wie eine Trägerlage 4 auszuführen.

Eine bevorzugte Ausführungsform einer Stabilisierungslage 5 besteht aus einem Papiervlies, einem Gittergewebe und einem thermoplastischen Film, einem sogenannten "Klebeweb". Diese Schichten werden zusammengeführt und bilden eine Stabilisierungslage 5. Das Klebeweb besteht vorzugsweise aus Co-Polyester.

In einer weiteren vorteilhaften Ausführungsform ist die Stabilisierungslage 5 farbig, vorzugsweise schwarz oder dunkelbraun. Die Stabilisierungslage 5 wird oberflächennah direkt unter der Furnierlage 2 und der Klebstoffschicht eingebaut. So kann es bei einer besonderen Ausführungsform von der Oberseite her sichtbar sein, wenn die Furnierlage 2 infolge Fehlstellen im Holz, im Bereich von Astlöchern, Rissen o.ä. nicht komplett abgedeckt ist. In diesem Fall sind die Harzeigenschaften des Klebers/Films hinsichtlich Menge und Schmelzeigenschaften so eingestellt, dass vorhandene Fehlstellen im Furnier, zumindest bei der Furnierlage 2 und der Oberseite, gefüllt werden.

Die Gegenzuglage 3 weist eine Stärke SZ von 0,45 bis 1,2 mm auf. In dem in Figur 1 gezeigten Ausführungsbeispiel ist die Gegenzuglage 3 ebenfalls aus einer aus Echtholz ausgebildeten Furnierlage hergestellt. Somit wird sowohl für die sichtseitige Furnierlage 2 als auch für die Gegenzuglage 3 ein Echtholzfurnier verwendet. Dies hat den Vorteil, dass das plattenförmige Bauelement 1 symmetrisch aufgebaut ist, was sich vorteilhaft auf die Lastverteilung auswirkt.

Die Stabilisierungslagen 5 sind aus einem Vliesmaterial oder Gewebematerial gebildet. Bei einer Biegebelastung des plattenförmigen Bauelements wird durch das Vliesmaterial oder das Gewebematerial sichergestellt, dass die sichtseitige Furnierlage 2 als auch die Gegenzuglage 3 nicht beschädigt werden. Insbesondere wird eine Rissbildung im Echtholz verhindert.

Die Stabilisierungslagen 5 sind vor dem Verpressen der einzelnen Lagen mit einem vorzugsweise thermoplastischen Klebstoff imprägniert bzw. mit einem vorzugsweise thermoplastischen Film belegt. Zum einen kann so eine sichere Verbindung der einzelnen Lagen des plattenförmigen Bauelements sichergestellt werden, zum anderen sorgt das Imprägniermittel dafür, dass das plattenförmige Bauelement 1 widerstandsfähig gegen Feuchtigkeit ist. Alternativ sind auch elastisch einstellbare duroplastische Filme/Imprägnate oder Kleber oder Beschichtungen aus Polyurethanbasis denkbar.

Die Furnierlage 2 weist eine Lackbeschichtung und/oder Ölbeschichtung auf. Durch eine entsprechende Beschichtung ist sichergestellt, dass die Echtholzoberfläche sowohl gegen Feuchtigkeit und Nässe als auch gegen Kratzer und anderweitigen Belastungen geschützt ist.

Die Furnierlage 2 ist aus Eiche, Esche, Nussbaum, Weißtanne, Olive, Kirschbaum, Hickory oder aus Tropenhölzern wie Wenge oder Teak oder aus geräucherten Hölzern gebildet.

Die Trägerlage 4 ist in dem in Figur 1 gezeigten Ausführungsbeispiel aus PUR gebundenen mineralischen Füllstoffen gebildet. Konkret handelt es sich um eine hochdichte mineralische Füllstofflage aus Gesteinsmehl, Dolomit, Kreide, Kaolin, Diatonit, Feldspat oder Quarzsand mit einer Dichte von größer oder gleich 1.200 kg/m³. Eine solche Mischung eignet sich aufgrund seiner elastischen und hydrophoben Eigenschaft besonders gut für die Verwendung als Trägerlage 4.

Alternativ kann die Trägerlage 4 auch aus Rezyklatmaterialien, Hanf, Ölfruchtfleischfaser, Kartonpapierträgern, Polyvinylbutyral (PVB) und/oder Flachs bzw. aus Korkschrot gebildet sein.

Die Figur 2 zeigt eine alternative Ausführungsvariante des erfindungsgemäßen plattenförmigen Bauelements 1. Hier ist lediglich zwischen der Furnierlage 2 und der Trägerlage 4 eine Stabilisierungslage 5 angeordnet. Im Rahmen der Erfindung hat sich herausgestellt, dass auch bereits die Nutzung einer einzigen Stabilisierungslage 5 im plattenförmigen Bauelement 1 zu einer hinreichenden Stabilität der sichtseitigen Furnierlage 2 führt, so dass eine Rissbildung vermieden werden kann.

Eine weitere Ausführungsvariante des plattenförmigen Bauelements 1 ist in Figur 3 gezeigt. Hier ist ebenfalls nur eine Stabilisierungslage 5 im plattenförmigen Bauelement 1 angeordnet und zwar zwischen der Gegenzuglage 3 und der Trägerlage 4. Auch hier ist eine hinreichende Stabilisierung sichergestellt, so dass eine Rissbildung in der Furnierlage 2 vermieden werden kann.

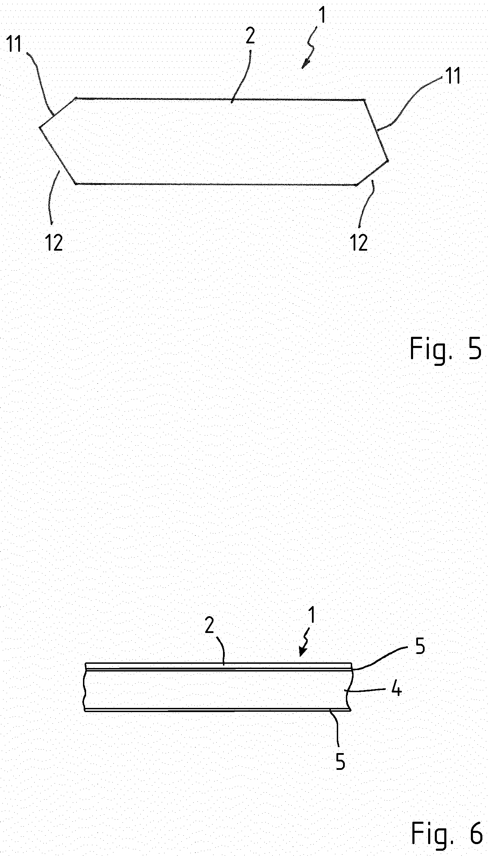

Die Figur 6 zeigt eine alternative Ausführungsform. Der Aufbau entspricht weitgehend der Figur 1, allerdings wird auf den Furniergegenzug verzichtet. Stattdessen bildet die Stabilisierungslage 5 auch gleichzeitig den Gegenzug. Bei diesem plattenförmigen Bauelement 1 bildet eine unterseitige Stabilisierungslage 5 die Produktrückseite bzw. die Produktunterseite. Die Stabilisierungslage 5 besteht aus einem Glasvlies, insbesondere einem beschichteten Glasvlies oder einem Glasfasergewebe.

In der Figur 4 ist schematisch ein Verfahren zur Herstellung eines erfindungsgemäßen plattenförmigen Bauelements 1 gezeigt. Zur Herstellung des plattenförmigen Bauelements 1 werden zunächst die einzelnen Lagen bereitgestellt, aus dem das plattenförmige Bauelement 1 gebildet wird. Diese umfassen eine Trägerlage 4, eine Gegenzuglage 3, eine Echtholzfurnierlage 2 und wenigstens eine Stabilisierungslage 5. In einem Verfahrensschritt A wird zunächst die Stabilisierungslage 5 mit einem thermoplastischen Klebstoff versehen. Der Klebstoff kann in Figur 4a gezeigt, auf die Stabilisierungslage 5 aufgesprüht werden. Auch eine anderweitige Aufbringung ist jedoch möglich, beispielsweise ein Auftrag als Film. Auch die Gegenzuglage 3 und/oder die Furnierlage 2 können in diesem Verfahrensschritt imprägniert werden, um die jeweiligen Lagen widerstandsfähig gegen Wasser und Feuchtigkeit zu machen. Werden Filme verwendet, erfolgt die Imprägnierung erst im Verfahrensschritt der Sandwichverpressung durch die dabei aufgebrachte Hitze und den Druck.

In dem darauf folgenden Verfahrensschritt B werden die einzelnen Lagen 2, 3, 4, 5 zu einem Mehrschichtkörper 6 angeordnet (Fig. 4b), dergestalt, dass die Trägerlage 4 zwischen der Furnierlage 2 und der Gegenzuglage 3 angeordnet ist, wobei jeweils eine Stabilisierungslage 5 zwischen der Furnierlage 2 und der Trägerlage 4 und zwischen der Gegenzuglage 3 und der Trägerlage 4 angeordnet ist. Anschließend wird gemäß Verfahrensschritt C der Mehrschichtkörper 6 in einer Heizvorrichtung 7, bei der es sich um eine Heizplatte handelt, eingespannt (Fig. 4c). Die Heizvorrichtung 7 ist auf einer oberen und unteren Heizplatte ausgebildet, so dass der Mehrschichtkörper 6 gleichmäßig auf eine Temperatur von 90 bis 150° C erwärmt werden kann. Bei diesen Temperaturen wird der thermoplastische Klebstoff aktiviert, so dass sich dieser verflüssigt.

Alternativ kann auch im ersten Schritt die Trägerlage 4 mit den Stabilisierungslagen 5 verbunden werden und dann die Furnierlage 2 und die Gegenzuglage 3 mit dem Sandwich aus Trägerlage 4 und Stabilisierungslagen 5 verpresst werden.

Im darauf folgenden Verfahrensschritt D wird der Mehrschichtkörper 6 in einer Presse 8 angeordnet (Fig. 4d). Hier wird der Mehrschichtkörper 6 mit einem Druck größer 50 N/cm² zu dem plattenförmigen Bauelement 1 verpresst. Der Pressvorgang wird mit einer Verweilzeit von 15 bis 90 Sekunden durchgeführt, bei Temperaturen von 10 bis 90° C. Während des Pressvorgangs verbindet der durch das Aufheizen gemäß Verfahrensschritt C verflüssigte Klebstoff die einzelnen Lagen 2, 3, 4, 5 des plattenförmigen Bauelements 1 miteinander. Ein so hergestellter Mehrschichtkörper 6 hat großformatige Abmessungen mit Breiten und Längen größer als 1,25 m. Ein solcher großformatiger Mehrschichtkörper 6 wird anschließend in Einzeldielenabmesserungen aufgeteilt, insbesondere gesägt.

In einem weiteren Verfahrensschritt E erfolgt eine Bearbeitung der Oberfläche. Dies ist in der Figur 4e schematisch dargestellt. Hierbei erfolgt eine Bearbeitung der Echtholzoberfläche durch eine Schleif- und/oder Bürstvorrichtung 9.

In einem anschließenden Verfahrensschritt F werden die Seitenwände bzw. Kanten des plattenförmigen Bauelements 1 mittels eines Bearbeitungswerkzeugs 10 profiliert und Fasen 11 ausgebildet (Fig. 4f).

Vorzugsweise werden an den Kanten der Seitenwände des Bauelements 1 zweiseitig oder vierseitig Fasen 11 ausgebildet.

Schematisch ist in der Figur 5 ein Bauelement 1 mit randseitigen Fasen 11 dargestellt. Die Fasen 11 weisen eine Fasenwinkel von 20 bis 45 Grad auf. Durch die Fasenausbildung kann die Verlegung der plattenförmigen Bauelemente 1 erleichtert werden. Zudem Kaschieren die Fasen leichte Höhenversätze zwischen den einzelnen plattenförmigen Bauelementen 1.

Figur 5 zeigt eine Kantenausführung eines Bauelements 1. Zu erkennen sind Hinterschneidungen 12 unterhalb der Fasen 11 am Bauelement 1. Die Hinterschneidungen 12 ermöglichen einen dichten Fugenschluss zwischen in einem Bodenbelag benachbarten Bauelement 1 und nehmen Klebstoff auf, sodass ein Austreten von Klebstoff an der Oberfläche vermieden wird.

Grundsätzlich kann vor oder nach dem Verfahrensschritt F kann eine Gestaltung der Echtholzoberfläche erfolgen. Exemplarisch ist in der Figur 4e und dem Verfahrensschritt E eine Gestaltung und Bearbeitung der Echtholzoberfläche vor der Herstellung der Fasen dargestellt. Eine solche Oberflächengestaltung kann Bearbeitungsschritte wie Schleifen, Bürsten, Aufbringen von Farbschichten, abriebfesten Lacken und Öl, Wachs sowie Hartwachsölschichten umfassen.

Erfolgt die Aufbringung von Farbschichten, Lacken und Öl/Wachs oder Hartwachsölschichten vor der Anbringung von Fasen, müssen diese anschließend durch eine geeignete Schutzbeschichtung, wie einen Fasenlack, geschützt werden. Dabei sind die Fasenlacke vorzugsweise farblich an die Oberflächenfarbe angepasst.

Im Rahmen einer Oberflächenbearbeitung wie Schleifen, Bürsten oder Strukturieren, wird die Echtholzoberfläche auch auf Fehlstellen, offene Risse, Astlöcher und ähnliches kontrolliert. Im Bedarfsfall werden solche Fehlstellen mit geeigneten Verfüllmaterialien bzw. Spachtelmaterialien gefüllt. Hierbei ist eine Anhaftung der Spachtelmaterialien an einer im Bereich der Fehlstelle gegebenenfalls sichtbaren Stabilisierungslage 5 von großer Bedeutung, sodass gegebenenfalls vorher noch ein Primer bzw. Haftvermittler in diesem Bereich aufgetragen werden muss.

Plattenförmige Bauelemente 1 werden vorzugsweise als Fußbodenbelag auf einem Untergrund verklebt. Dazu eignen sich handelsübliche Bodenklebstoffe, die mit einem Zahnspachtel aufgetragen werden. In dieses Klebebett werden die Bauelemente 1 eingelegt und angewalzt.

Insbesondere für Do-it-yourself-Anwendungen ist vorgesehen, dass die Bauelemente 1 mit einer an der Produktunterseite bereits werkseitig applizierten Klebestoffbeschichtung, insbesondere einem Klebefilm, ausgestattet sind. Klebestoffbeschichtungen, insbesondere Klebefilme, zeichnen sich durch eine einfache Handhabung aus und haben zudem den Vorteil, dass sich die Bauelemente im Bedarfsfall, also beispielsweise bei einer Sanierung auch wieder leicht von dem Untergrund entfernen lassen, da die werkseitig applizierte Klebestoffbeschichtung eine Sollbruchstelle im Verbund darstellt, die ein Lösen der Bauelemente 1 von dem Untergrund bei Scherbeanspruchung ermöglicht.

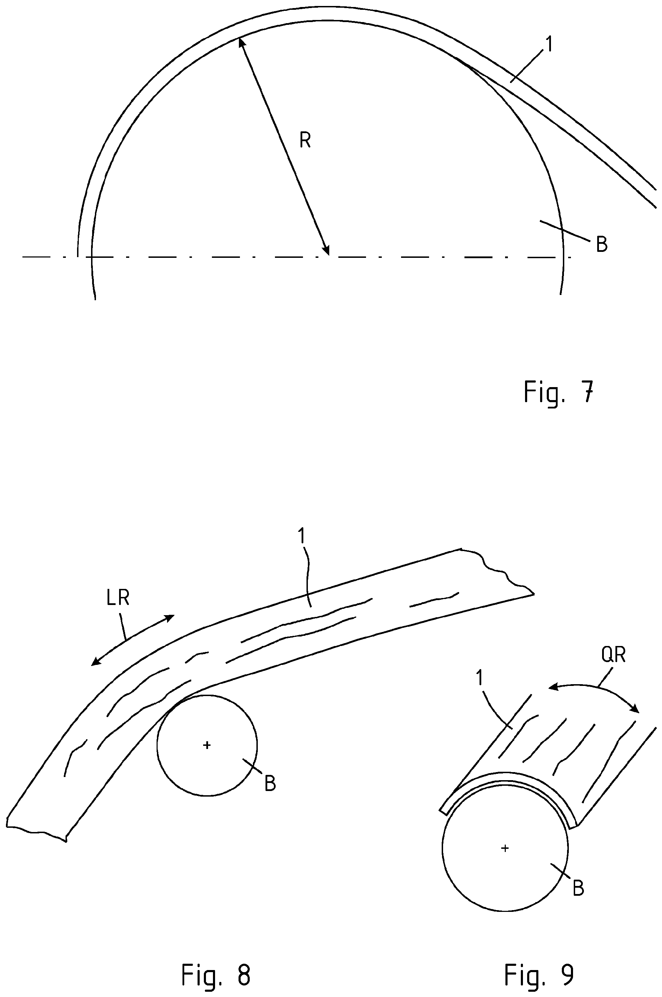

In den Figuren 7 bis 9 sind technisch schematisiert Biegerollentests dargestellt und erläutert. Ein Biegerollentest ist ein Prüfverfahren, um die Biegsamkeit eines plattenförmigen Bauelements 1 zu testen. Bei diesem Test wird ein plattenförmiges Bauelement 1 über eine Rolle B mit einem bestimmten Durchmesser gebogen. In der Figur 7 ist der Radius R der Rolle B gekennzeichnet. Die Biegung erfolgt in Längsrichtung LR eines plattenförmigen Bauelements (Figur 8) und in Querrichtung QR eines plattenförmigen Bauelements 1 (Figur 9). Dabei wird gemessen, wie stark ein plattenförmiges Bauelement 1 gebogen werden kann, bevor es Risse bekommt, bricht oder dauerhaft verformt wird. Das Ergebnis eines Biegerollentests wird folglich zu einer Aussage, wie biegsam oder flexibel ein plattenförmiges Bauelement 1 ist. Praktische Biegerollentests haben gezeigt, dass ein plattenförmiges Bauelement 1 in seiner Längsrichtung LR über eine Rolle B mit einem Radius R von 500 mm gebogen werden kann, ohne dass es bricht oder auch eine oberseitige Beschichtung rissig wird.

Ein Biegerollentest in Querrichtung QR hat zu dem Ergebnis geführt, dass ein plattenförmiges Bauelement 1 in Querrichtung QR über eine Rolle B mit einem Radius R von 200 mm gebogen werden kann, ohne Beschädigungen am inneren und/oder äußeren Aufbau.

### Bezugszeichen:

- 1 -: Bauelement
- 2 -: Furnierlage
- 3 -: Gegenzuglage
- 4 -: Trägerlage
- 5 -: Stabilisierungslage
- 6 -: Mehrschichtkörper
- 7 -: Heizvorrichtung
- 8 -: Presse
- 9 -: Schleif- und/oder Bürstvorrichtung
- 10 -: Bearbeitungswerkzeug
- 11 -: Fase
- 12 -: Hinterschneidung

- B -: Biegerolle
- R -: Radius v. B
- SG -: Gesamtstärke
- SF -: Stärke
- ST -: Stärke
- SZ -: Stärke
- LR -: Längsrichtung v. 1
- QR -: Querrichtung v. 1

## Patentansprüche

1. Plattenförmiges Bauelement (1) aufweisend eine sichtseitige aus Echtholz ausgebildete Furnierlage (2) und eine Gegenzuglage (3), wobei zwischen der Furnierlage (2) und der Gegenzuglage (3) eine Trägerlage (4) angeordnet ist, **dadurch gekennzeichnet, dass** zwischen der Furnierlage (2) und der Trägerlage (4) und/oder zwischen der Gegenzuglage (3) und der Trägerlage (4) eine Stabilisierungslage (5) angeordnet ist, wobei das plattenförmigen Bauelement (1) eine Gesamtstärke (SG) von 1,5 mm bis 4,0 mm aufweist.

2. Plattenförmiges Bauelement (1) nach Anspruch 1, **dadurch gekennzeichnet, dass** das plattenförmigen Bauelement (1) eine Gesamtstärke (SG) von 2 mm bis 3,5 mm aufweist.

3. Plattenförmiges Bauelement (1) nach Anspruch 1 oder 2, **dadurch gekennzeichnet, dass** die Furnierlage (2) eine Stärke (SF) kleiner als 1,0 mm, insbesondere zwischen 0,55 mm und 0,65 mm aufweist.

4. Plattenförmiges Bauelement (1) nach einem der Ansprüche 1 bis 3, **dadurch gekennzeichnet, dass** die Trägerlage (4) eine Stärke (ST) zwischen 0,8 mm und 3,0 mm aufweist.

5. Plattenförmiges Bauelement (1) nach einem der Ansprüche 1 bis 4, **dadurch gekennzeichnet, dass** die Stabilisierungslage (5) aus einem Vliesmaterial oder Gewebematerial gebildet ist.

6. Plattenförmiges Bauelement (1) nach einem der Ansprüche 1 bis 5, **dadurch gekennzeichnet, dass** die Stabilisierungslage (5), die Gegenzuglage (3) und/oder die Furnierlage (2) imprägniert ist, insbesondere mit einem thermoplastischen Klebstoff.

7. Plattenförmiges Bauelement (1) nach einem der Ansprüche 1 bis 6, **dadurch gekennzeichnet, dass** die Furnierlage (2) eine Lackbeschichtung und/oder Ölbeschichtung aufweist.

8. Plattenförmiges Bauelement (1) nach einem der Ansprüche 1 bis 7, **dadurch gekennzeichnet, dass** die Furnierlage (2) aus Eiche, Esche, Nussbaum, Weißtanne, Olive, Kirschbaum, Hickory, geräucherte Hölzer oder tropische Hölzer wie Teak oder Wenge gebildet ist.

9. Plattenförmiges Bauelement (1) nach einem der Ansprüche 1 bis 8, **dadurch gekennzeichnet, dass** die Trägerlage (4) aus mineralischen Füllstoffen gebildet ist und insbesondere eine Dichte größer 1.200 kg/m³, bevorzugt größer 1.350 kg/m³, besonders bevorzugt größer 1.500 kg/m³ besitzt.

10. Plattenförmiges Bauelement (1) nach nach einem der Ansprüche 1 bis 9, **dadurch gekennzeichnet, dass** die Trägerlage (4) und die zumindest eine Stabilisierungslage (5) dazu eingerichtet und bestimmt sind, ein klimabedingtes Längenwachstum der Furnierlage (2) zu kompensieren.

11. Plattenförmiges Bauelement (1) nach einem der Ansprüche 1 bis 10, **dadurch gekennzeichnet, dass** ein unverklebtes Bauelement (1) ein Breitenwachstum kleiner 0,6 %, bevorzugt kleiner 0,4 %, besonders bevorzugt kleiner 0,2 %, aufweist.

12. Platttenförmiges Bauelement (1) nach einem der Ansprüche 1 bis 11, **dadurch gekennzeichnet, dass** eine Kantenquellung nach 24 h Wasserlagerung kleiner 8 %, besonders bevorzugt kleiner 5 %, beträgt.

13. Plattenförmiges Bauelement (1) nach einem der Ansprüche 1 bis 12, **dadurch gekennzeichnet, dass** das Bauelement (1) biegsam ist und das Bauelement (1) in einem Biegerollentest bei dem das Bauelement (1) in Längsrichtung (LR) über eine Rolle mit einem Radius R von 500 mm gebogen wird, nicht bricht und das Bauelement (1) bei einem Biegerollentest bei dem das Bauelement (1) in Querrichtung über eine Rolle mit einem Radius R von 200 mm gebogen wird, nicht bricht.

14. Plattenförmiges Bauelement (1) nach einem der Ansprüche 1 bis 13, **dadurch gekennzeichnet, dass** die Trägerlage (4) aus Rezyklatmaterialien, Hanf, Ölfruchtfleischfaser, Kaffeesatz, Tee, Leder, KartonPapierträgern und/oder Flachs gebildet ist.

15. Plattenförmiges Bauelement (1) nach einem der Ansprüche 1 bis 14, **dadurch gekennzeichnet, dass** die Trägerlage (4) als Polyvinylbutyral (PVB) gebildet ist.

16. Plattenförmiges Bauelement (1) nach einem der Ansprüche 1 bis 14, **dadurch gekennzeichnet, dass** die Trägerlage (4) aus recycelten Textilien, insbesondere textilen Bekleidungsmaterialien, vorzugsweise Recyclingbaumwolle gebildet ist.

17. Plattenförmiges Bauelement (1) nach einem der Ansprüche 1 bis 15, **dadurch gekennzeichnet, dass** die Gegenzuglage (3) aus einer Echtholz Furnierlage gebildet ist.

18. Plattenförmiges Bauelement (1) nach einem der Ansprüche 1 bis 17, **dadurch gekennzeichnet, dass** die Gegenzuglage (3) aus einem Holzfurnier besteht und eine Feuchtigkeitsabsperrung aufweist, insbesondere eine feuchtigkeitssperrende Lackierung und/oder Beschichtung aufweist.

19. Plattenförmiges Bauelement (1) nach einem der Ansprüche 1 bis 18, **dadurch gekennzeichnet, dass** oberseitige Fehlstellen in der Furnierlage (2) mit einer flexiblen Spachtelmasse gefüllt sind.

20. Plattenförmiges Bauelement (1) nach einem der Ansprüche 1 bis 19, **dadurch gekennzeichnet, dass** das Bauelement (1) dazu eingerichtet und bestimmt ist, als gebrauchsfertiger Boden- oder Wandbelag verlegt und genutzt zu werden.

21. Plattenförmiges Bauelement (1) nach einem der Ansprüche 1 bis 20, **dadurch gekennzeichnet, dass** das Bauelement (1) mit einem Cuttermesser oder einer Klinge schneidbar ist und/oder durch Einritzen und Brechen trennbar ist.

22. Plattenförmiges Bauelement (1) nach einem der Ansprüche 1 bis 21, **dadurch gekennzeichnet, dass** die Stabilisierungslage (5) eine Dehnung kleiner 7 % nach DIN-ISO 1924-2 besitzt.
